# EUROPÄISCHE PATENTSCHRIFT

(11) **EP 0 387 503 B1**
(45) Veröffentlichungstag und Bekanntmachung des Hinweises auf die Patenterteilung: **18.11.1993**
(21) Anmeldenummer: 90101278.1
(22) Anmeldetag: 20.02.1987
(51) Int. Cl.: G01K 11/20

(54) **Vorrichtung zur Messung der Fluoreszenz-Abklingdauer einer fluoreszierenden Substanz**
Device to measure the fluorescence-diminishing-time of a fluorescent substance
Dispositif pour mesurer le temps de diminution de la fluorescence d'une substance fluorescente

(30) Priorität: 21.02.1986 DE 3605598; 06.10.1986 DE 3634045
(43) Veröffentlichungstag der Anmeldung: 19.09.1990
(62) Teilanmeldung aus: 87102428.7
(73) Patentinhaber: TACAN CORPORATION, Carlsbad California 92008 (US)
(72) Erfinder: Fehrenbach, Gustav Werner, Dr., D-6450 Hanau 9 (DE); Schäfer, Wolfgang, Dr., D-6451 Grosskrotzenburg (DE)
(74) Vertreter: Stoffregen, Hans-Herbert, Dr. Dipl.-Phys.

(56) Entgegenhaltungen:
- GB-A- 2 113 837
- US-A- 4 542 987
- PATENT ABSTRACTS OF JAPAN, Band 8, Nr. 31 (P-253)[1468], 9. Februar 1984;& JP-A-58 186 024

## Beschreibung

Die Erfindung bezieht sich auf eine Verwendung einer fluoreszierenden Substanz, deren Fluoreszenz-Abklingdauer von mindestens einer physikalischen Größe wie Temperatur oder Druck abhängt, indem die Substanz über einen Lichtwellenleiter einer Strahlung ausgesetzt wird, die in zeitlichen Abständen wiederholt wird und die eine Fluoreszenz-Strahlung hervorruft, die einem photoelektrischen Empfänger zugeführt wird, dessen Ausgangssignale ein Maß für die physikalische Größe sind, wobei die fluoreszierende Substanz aus einem Kristall besteht, der mit gleichen oder verschiedenen dreiwertigen Ionen aus der Gruppe der Seltenen Erden dotiert ist.

Um insbesondere Temperaturen an einem Ort zu bestimmen und an einem anderen Ort auszuwerten, sind faseroptische Sensoren mit einer fluoreszierenden Substanz bekannt, deren Abklingzeit eine Aussage über die Temperatur ermöglicht. Hierzu kann die fluoreszierende Strahlung von einem sinusförmig modulierten Strahler angeregt werden. Das aus dem zeitlich verzögerten Fluoreszenzlicht gewonnene Signal wird über ein Zeitglied auf die Störung des Modulators rückgekoppelt. Die sich in dem selbsterregten Schwingkreis einstellende Frequenz ist dabei abhängig von der Fluoreszenzabklingdauer und damit von den physikalischen Größen, die diese beeinflussen.

Aus der US-A 4,542,982 ist eine Vorrichtung zur Messung einer Temperatur bekannt, bei der eine fluoreszierende Substanz verwendet wird, die aus einem Kristall besteht, der seinerseits mit dreiwertigen Ionen der Seltenen Erden dotiert ist. In Frage kommt Rubin. Bei einer entsprechenden Vorrichtung nach der GB-A 2 113 837 wird als Fluoreszenzmaterial Nd:YAG benutzt.

Weitere Vorrichtungen und damit durchgeführte Verfahren in Verbindung mit einem faseroptischen Temperaturmesser sind z.B. von Th. Bosselmann, A. Reule, J. Schröder: "Fiber-Optic Temperature Sensor using fluorescence Decay Time" in 2nd International Conference on Optical Fiber Sensors, Stuttgart, 1984, VDE-Verlag GmbH, Berlin, Offenbach, oder aus der EPB 0 029 653 bekannt.

Aufgabe der vorliegenden Erfindung ist es, eine fluoreszierende Substanz der eingangs beschriebenen Art zur Verfügung zu stellen, die eine ausgeprägte temperaturabhängige Fluoreszenzabklingzeit aufweist, so daß die gewünschte physikalische Größe wie Temperatur im erforderlichen Umfang und mit der gewünschten Genauigkeit bestimmt werden kann. Dabei sollen zur Erfassung der Fluoreszenzstrahlung z.B. preiswerte und zuverlässige Si-Photodioden benutzt werden können.

Die Aufgabe wird erfindungsgemäß dadurch gelöst, daß der Kristall aus Cr³⁺:Y₃Al₅O₁₂ besteht.

Nach einem weiteren Vorschlag ist vorgesehen, daß der Querschnitt des Kristalls dem des Lichtwellenleiters angepaßt ist, wobei der Kristall vorzugsweise eine Quader- oder Zylinderform aufweist. Durch diese Maßnahme werden Strahlungsverluste minimalisiert.

Wesentlicher Vorteil der erfindungsgemäßen fluoreszierenden Substanz gegenüber eines Rubins ist die deutlich höhere Temperaturempfindlichkeit hinsichtlich der Lumineszenzabklingzeit (1,2 % pro °C gegenüber 0,5 % pro °C bei Rubin) und damit die wesentlich bessere Eignung für eine exakte Temperaturmessung.

Ein weiterer Vorteil ist die langwelligere Absorptionsbande von Cr:YAG gegenüber Rubin, die den Einsatz von lichtstarken Halbleiterlichtquellen zur Anregung erlaubt.

Das auch bekannte Nd:YAG kommt als Lumineszenzmaterial für die faseroptische Temperaturmessung auf der Basis der Lumineszenzabklingzeit nur rein theoretisch in Frage, da die Lebensdauer der lumineszierenden Zustände in diesem Material nur eine geringe Temperaturabhängigkeit zeigt. Ferner liegt das Lumineszenzspektrum von Nd-YAG für den Einsatz von preiswerten und zuverlässigen Si-Photodioden sehr ungünstig.

Weitere Einzelheiten, Merkmale und Vorteile der Erfindung ergeben sich nicht nur aus den Ansprüchen, den diesen zu entnehmenden Merkmalen -für sich und/oder in Kombination-, sondern auch aus der nachfolgenden Beschreibung eines zeichnerisch dargestellten Ausführungsbeispiels.

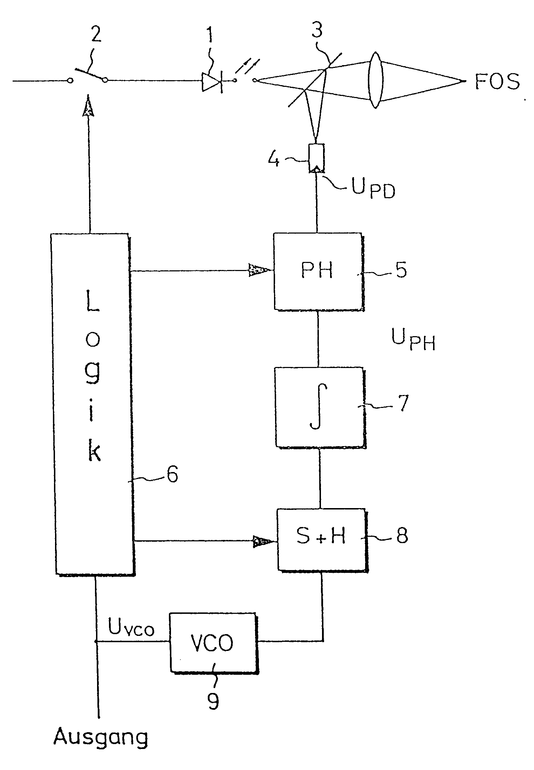

Die einzige Figur zeigt beispielhaft den Prinzipaufbau eines faseroptischen Temperatursensors, bei dem die Lumineszenz-Relaxationszeit durch den Einsatz der alternierenden phasenempfindlichen Polaritätswendung ohne aufwendige Maßnahmen zur Unterdrückung des Übersprechens des Anregungskanals ausgewertet wird.

Eine lichtemittierende Diode (1) (LED) wird über einen Schalter (2) periodisch mit Betriebsspannung versorgt. Die von der LED 1 emitterte Strahlung wird z.B. über eine nicht näher bezeichnete Optik in einen Lichtwellenleiter eingekoppelt, an dessen anderem Ende eine lumineszierende Substanz bestehend aus einem Sensorkristall aus Cr³⁺:Y₃Al₅O₁₂ angebracht ist. Dabei ist vorzugsweise der Querschnitt des Kristalls dem des Lichtwellenleiters angepaßt, um Strahlungsverluste zu vermeiden.

Das von der Substanz ausgehende Lumineszenzlicht wird über den Lichtwellenleiter und einen Strahlenteiler (3) zu einem photoelektrischen Empfänger (4) z.B. einer Photodiode geleitet.

Am Ausgang des photoelektrischen Empfängers (4) tritt ein Signal U_{PD} auf. Dieses Signal gelangt in eine Anordnung (5) zum phasenempfindlichen Polaritätswenden, die von einer Logikschaltung (6) gesteuert wird, die auch den vorzugsweise kontaktlosen Schalter (2) steuert. Der phasenempfindlichen Anordnung (5) ist ein Integrator (7) nachgeschaltet, an den eine Abtast- und Halteschaltung (8) angeschlossen ist, die ebenfalls durch die Logikschaltung (6) gesteuert wird. Mit der Abtast- und Halteschaltung (8) ist der Steuereingang eines spannungsgesteuerten Oszillators (VCO) (9) verbunden, dessen Ausgang an einen Eingang der Logikschaltung (6) angeschlossen ist. Durch die Logikschaltung (6) wird somit ein Regelkreis geschlossen, dessen Regelgröße die Frequenz der Schwingung der Strahlung ist, die über den VCO als Stellglied beeinflußt wird.

## Patentansprüche

1. Verwendung einer fluoreszierenden Substanz, deren Fluoreszenz-Abklingdauer von mindestens einer physikalischen Größe wie Temperatur oder Druck abhängt, indem die Substanz über einen Lichtwellenleiter einer Strahlung ausgesetzt wird, die in zeitlichen Abständen wiederholt wird und die eine Fluoreszenz-Strahlung hervorruft, die einem photoelektrischen Empfänger zugeführt wird, dessen Ausgangssignale ein Maß für die physikalische Größe sind, wobei die fluoreszierende Substanz aus einem Kristall besteht, der mit dreiwertigen Ionen aus der Gruppe der Seltenen Erden dotiert ist,
**dadurch gekennzeichnet,**
daß der Kristall aus Cr³⁺:Y₃Al₅O₁₂ besteht.

2. Verwendung nach Anspruch 1,
**dadurch gekennzeichnet,**
daß der Querschnitt des Kristalls dem des Lichtwellenleiters angepaßt ist, wobei der Kristall vorzugsweise eine Quader- oder Zylinderform aufweist.

## Claims

1. Utilisation of a fluorescent substance, whose fluorescence decay time depends on at least one physical quantity as temperature or pressure, in that the substance is exposed to radiation repeated at sepcified time intervals and produces fluorescent radiation transmitted to a photoelectric receiver whose output signals are a measure of the physical quantity, the fluorescent substance consists of a crystal doped with threevalent ions of the group of the rare earths,
**characterized in**
that the crystal consists of Cr³⁺:Y₃Al₅O₁₂.

2. Utilisation according to claim 1,
**characterized in**
that the cross-section of the crystal is adapted to that of the light wave conductor, said crystal has preferably the shape of a square block or a cylinder.

## Revendications

1. Utilisation d'une substance fluorescente dont la durée de déclinaison de la fluorescence dépend au moins d'une grandeur physique, comme la température ou la pression, la substance étant exposée à un rayonnement par un guide d'ondes lumineux (fibre optique), rayonnement qui est répété à intervalle de temps et qui provoque un rayonnement fluorescent ; ce rayonnement étant amené à un récepteur photoélectrique dont les signaux de sortie sont une mesure pour les grandeurs physiques, la substance fluorescente étant un cristal dopé d'ions à trois valences du groupe des terres rares, caractérisé en ce que le cristal correspond à la formule :
Cr³⁺ : Y₃Al₅O₁₂

2. Utilisation selon la revendication 1, caractérisé en ce que la section du cristal est adaptée à celle du guide d'ondes lumineux (fibre optique), le cristal présentant avantageusement une forme de parallélépipède rectangle ou de cylindre.
